# FASCICULE DE BREVET EUROPEEN

(11) **EP 3 288 737 B1**
(45) Date de publication et mention de la délivrance du brevet: **03.04.2019**
(21) Numéro de dépôt: 16722313.0
(22) Date de dépôt: 26.04.2016
(51) Int. Cl.: B29B 11/16, F01D 5/28, B29C 70/86, B29L 31/08

(54) **AUBE MUNIE DE PLATEFORMES COMPORTANT DES INSERTS**
SCHAUFEL MIT BEREICHEN MIT EINSÄTZEN
BLADE COMPRISING LANDS WITH INSERTS

(30) Priorité: 29.04.2015 FR 1553847
(43) Date de publication de la demande: 07.03.2018
(73) Titulaire: SAFRAN AIRCRAFT ENGINES, 75015 Paris (FR)
(72) Inventeur: BERDOU, Caroline, Jacqueline, Denise, 77550 Moissy-Cramayel Cedex (FR); BOISSON, Alexandre Bernard, Marie, 77550 Moissy-Cramayel Cedex (FR); GIMAT, Matthieu Arnaud, 77550 Moissy-Cramayel Cedex (FR); LAGUERRE, Audrey, 77550 Moissy-Cramayel Cedex (FR)
(74) Mandataire: Cabinet Beau de Loménie
(86) Numéro de dépôt international: PCT/FR2016/050981
(87) Numéro de publication internationale: WO 2016/174345

(56) Documents cités:
- WO-A1-2013/079860
- WO-A1-2014/076408
- WO-A2-2013/104852

## Description

### DOMAINE DE L'INVENTION

Le présent exposé concerne une préforme fibreuse pour une aube de turbomachine ainsi qu'une aube monobloc pouvant être formée au moyen d'une telle préforme, une roue aubagée et une turbomachine comprenant une telle aube.

Une telle préforme peut être utilisée pour réaliser en une seule pièce des aubes comprenant des plateformes aérodynamiques munies d'inserts de différentes natures. De telles aubes peuvent être notamment des aubes de soufflante d'un turboréacteur d'avion, pour ne citer que cet exemple.

### ETAT DE LA TECHNIQUE ANTERIEURE

Afin de réduire la masse des turboréacteurs d'avion, et donc de réduire la consommation de ces turboréacteurs, il est désormais connu de fabriquer certaines aubes du réacteur en matériau composite, bien plus léger que le métal traditionnellement utilisé jusqu'alors.

A cette fin, il est également connu aujourd'hui d'utiliser des techniques de tissage tridimensionnel afin d'obtenir des préformes fibreuses aboutissant à des aubes composites de très bonne qualité. Le document WO 2014/076408 décrit notamment un procédé de tissage d'une préforme fibreuse permettant d'obtenir de manière monobloc des aubes munies de plateformes intrados et extrados, ces plateformes étant d'épaisseur constante.

Toutefois, ces plateformes doivent répondre à un grand nombre d'exigences et assurer de nombreuses fonctions. De manière principale, de telles plateformes doivent assurer une fonction aérodynamique de définition et de canalisation de la veine d'écoulement de l'air dans le turboréacteur. Toutefois, elles doivent également assurer une tenue mécanique garantie pour toutes les phases de vol ainsi qu'une intégration cohérente dans l'environnement du moteur en évitant notamment d'introduire des perturbations dans la veine d'air en aval. Ainsi, la géométrie des plateformes doit être finement contrôlée, et ceci durant tout le fonctionnement du moteur, et quelle que soit la phase du vol.

Or, en particulier, lors de tests et simulations réalisées sur de telles aubes, les inventeurs ont constaté que différentes zones de ces plateformes issues d'un tissage 3D se déformaient de manière plus ou moins importante sous l'effet des efforts centrifuges s'exerçant lors du fonctionnement de la turbomachine. Les inventeurs ont notamment remarqué que la déformation d'une zone d'une plateforme est d'autant plus importante qu'elle présente un déport important par rapport à la pale.

Dès lors, ces plateformes présentent en fonctionnement des irrégularités de forme susceptibles de perturber la veine d'air et donc le rendement de la turbomachine. En outre, les inventeurs ont constaté que le fléchissement est dépendant, entre autres, de la longueur du porte-à-faux. Ainsi, le porte-à-faux étant différent entre les plateformes extrados et intrados de deux aubes consécutives, il en résulte une discontinuité de fléchissement à cet interface et un risque de chevauchement des plateformes.

Il existe donc un réel besoin pour une préforme fibreuse, une aube, une roue aubagée et une turbomachine qui soient dépourvus, au moins en partie, des inconvénients inhérents aux systèmes connus précités.

### PRESENTATION DE L'INVENTION

Le présent exposé concerne une préforme fibreuse pour une aube de turbomachine, obtenue par tissage tridimensionnel, comprenant un premier tronçon longitudinal, apte à former un pied d'aube, un deuxième tronçon longitudinal, prolongeant vers le haut le premier tronçon longitudinal, apte à former une partie de pale, un premier tronçon transversal, s'étendant transversalement depuis la jonction entre les premier et deuxième tronçons longitudinaux, apte à former une première plateforme, dans laquelle le premier tronçon transversal comprend au moins une portion déliée comportant un pan supérieur et un pan inférieur, et dans laquelle au moins un insert est disposé entre les pans supérieur et inférieur de la portion déliée du premier tronçon transversal.

Grâce à une telle préforme, il est possible d'obtenir de manière monobloc une aube comprenant un pied d'aube, une partie de pale et au moins une plateforme munie d'au moins un insert permettant de perfectionner la géométrie de la plate-forme, de maîtriser cette géométrie durant le fonctionnement du moteur et/ou de doter la plate-forme de certaines fonctions telles des fonctions de tenue mécanique ou d'intégration.

En fonction de la stratégie de tissage retenue, le tronçon transversal aboutissant à la plateforme peut comprendre naturellement deux pans déliés et donc libres d'être déplacés l'un par rapport à l'autre. Dans d'autres stratégies de tissage, le tronçon transversal aboutissant à la plateforme est habituellement monobloc : toutefois, dans ce cas-là, il est facile de prévoir une déliaison à la base du tronçon transversal pour scinder ce dernier en deux pans déliés. Dans un cas comme dans l'autre, il est alors facile d'introduire un ou plusieurs inserts dans l'espace séparant les pans déliés lorsqu'ils sont repliés l'un vers l'autre dans leur position finale transversale.

Dès lors, selon la fonction dont on souhaite doter la plateforme, il est possible d'introduire dans cet espace des inserts de natures variées, et notamment de formes et de compositions variées.

Ainsi, grâce à cette préforme, on peut bénéficier des avantages d'une aube monobloc tissée 3D (gain de masse ; nombre de pièces réduit ; montage et maintenance simplifiés etc.) tout en permettant que d'autres fonctions habituelles de telles plateformes puissent être correctement assurées.

Dans le présent exposé, les termes « longitudinal », « transversal », « inférieur », « supérieur » et leurs dérivés sont définis par rapport à la direction principale de l'aube considérée, le pied d'aube étant situé du côté inférieur de l'aube selon cette référence ; les termes « proximal », « distal » et leurs dérivés sont définis par rapport à la pale de l'aube ; les termes « axial », « radial », « tangentiel » et leurs dérivés sont quant à eux définis par rapport à l'axe principal de la roue comportant ces aubes, c'est-à-dire en général l'axe de la turbomachine. On entend par « plan axial » un plan passant par l'axe principal de la turbomachine et par « plan radial » un plan perpendiculaire à cet axe principal ; on entend par « plan longitudinal » un plan parallèle à la direction principale de l'aube et perpendiculaire à la direction d'extension du pied d'aube : un tel plan longitudinal est donc un plan radial dans le référentiel de la turbomachine. En outre, les termes « amont » et « aval » sont définis par rapport à la circulation de l'air dans la turbomachine.

Enfin, on entend par « tissage tridimensionnel » une technique de tissage dans laquelle des fils de trame circulent au sein d'une matrice de fils de chaîne de manière à former un réseau tridimensionnel de fils selon une armure tridimensionnelle : toutes les couches de fils d'une telle structure fibreuse sont alors tissées au cours d'une même étape de tissage au sein d'un métier à tisser tridimensionnel.

Dans certains modes de réalisation, au moins un insert est un fil. Il peut notamment s'agir d'un fil métallique, carbone ou de SiC, par exemple de la même nature que les fils utilisés pour tisser la préforme fibreuse. Contrairement aux fils de la structure fibreuse principale dont les orientations sont fixées par la stratégie de tissage utilisée, un tel fil bénéficie d'une totale liberté d'orientation. On peut donc choisir de le disposer selon n'importe quelle direction le long de laquelle on souhaite rigidifier la plateforme. Les fils de raideur augmentée permettent de réduire des déplacements hors critères.

Dans certains modes de réalisation, au moins un insert est un voile tissé bidimensionnel. Un tel voile bidimensionnel peut permettre, localement ou sur toute la surface du tronçon transversal, d'augmenter l'épaisseur de la préforme et donc de la plateforme qui en sera issue. Un tel voile peut notamment être réalisé dans le même matériau que le reste de la préforme fibreuse. On comprend toutefois ici qu'un tel voile est indépendant de la structure fibreuse principale de la préforme tissée tridimensionnellement et qu'il est rapporté dans cette dernière entre les pans supérieur et inférieur de la portion déliée de son premier tronçon transversal. Plusieurs voiles de ce type peuvent être superposés, assemblés ou non, et insérés entre les pans supérieur et inférieur pour gagner plus d'épaisseur. Ces voiles peuvent aussi dans certains cas permettre de réduire des déplacements hors critères si le matériau choisi est d'une raideur supérieure.

Dans certains modes de réalisation, au moins un insert est un bloc fibreux tissé tridimensionnellement. Un tel bloc fibreux tissé tridimensionnellement, mais indépendamment de la structure fibreuse principale de la préforme, permet d'augmenter facilement l'épaisseur du tronçon transversal, et donc de la plateforme qui en sera issue, sans impacter la stratégie de tissage du reste de la préforme fibreuse. Un tel bloc fibreux peut notamment être réalisé dans le même matériau que le reste de la préforme fibreuse. Ce bloc fibreux permet d'apporter de la raideur dans plusieurs directions et surtout d'apporter une raideur qui peut être différente selon la direction.

Dans certains modes de réalisation, l'épaisseur et/ou le nombre de couches du bloc fibreux est évolutif.

Dans certains modes de réalisation, au moins un insert est un matériau nid d'abeille ou une mousse. Un tel insert indépendant de la structure fibreuse principale de la préforme et placé entre les pans supérieur et inférieur, permet d'augmenter facilement l'épaisseur du tronçon transversal, et donc de la plateforme qui en sera issue, sans impacter la stratégie de tissage du reste de la préforme fibreuse. Un tel insert permet d'avoir des épaisseurs importantes sans augmentation significative de masse. Le comportement en flexion de la plateforme s'en trouve de plus amélioré.

Dans certains modes de réalisation, au moins un insert est un bouche-trou. Un tel élément, également communément appelé « gap-filler », permet de combler une lacune dans une préforme. Un tel bouche-trou peut ainsi combler une lacune dans la préforme résultant d'une déliaison, d'un croisement de couches ou tout simplement d'un pliage de la préforme. Il peut notamment s'agir d'une tresse, d'un toron de fibres carbone ou encore d'un jonc en résine chargée ou non. Un tel insert permet aussi d'apporter de manière localisée de la raideur.

Dans certains modes de réalisation, au moins un insert est un raidisseur incluant une tige ou une plaque rigide. Un tel raidisseur permet de renforcer la tenue mécanique de la plateforme, notamment vis-à-vis des efforts centrifuges. En particulier, un tel raidisseur assure une déformation plus régulière de la plateforme sous l'effet de la force centrifuge au cours du fonctionnement de la turbomachine. En effet, la présence de ce raidisseur permet de mieux solidariser les différentes zones de la plateforme afin de tendre vers une uniformisation de leurs déformations radiales. On moyenne ainsi en quelque sorte les déformations de la plateforme, les zones habituellement fortement défléchies tirant vers l'extérieur les zones habituellement moins défléchies tandis que ces dernières retiennent vers l'intérieur les zones soumises à une force centrifuge plus importante. Dès lors, la plateforme conserve en fonctionnement un profil relativement régulier. On contribue ainsi à maintenir la régularité du flux aérodynamique ainsi que la correcte intégration de la plateforme dans l'environnement moteur. Un tel raidisseur peut notamment être métallique ou bien réalisé en fibres de verre.

Dans certains modes de réalisation, la section du raidisseur est évolutive. De cette manière, il est possible de tenir compte de la géométrie de la plateforme pour compenser de manière plus optimisée les déformations de cette dernière. En particulier, une largeur évolutive permet de régler d'une part la raideur du raidisseur, et donc la transmission des efforts d'une zone à l'autre de la plateforme, et d'autre part de régler la masse ajoutée localement à la plateforme, et donc de régler localement les efforts centrifuges exercés sur la plateforme. En particulier, en ajoutant localement de la masse à une zone habituellement moins défléchies de la plateforme, on augmente l'intensité de la force centrifuge dans cette zone de telle sorte que cette dernière sera un peu plus défléchie et s'alignera plus facilement avec les zones voisines naturellement plus défléchies.

Dans certains modes de réalisation, au moins un insert est disposé axialement le long du premier tronçon transversal. Un tel insert permet ainsi de rigidifier axialement la plateforme entre son amont et son aval afin notamment d'assurer la régularité du flux d'air.

Dans certains modes de réalisation, au moins un insert est disposé le long de l'extrémité proximale du premier tronçon transversal. En fonction de la stratégie de tissage utilisée, une lacune peut être présente dans la préforme le long de l'extrémité proximale du premier tronçon transversal : une telle lacune, causée en général par des sorties de fils, entraîne alors localement un taux volumique de fibres plus faible et donc une fragilité accrue de cette portion de l'aube. Un tel insert permet alors de combler cette lacune.

Dans certains modes de réalisation, au moins un insert est disposé le long de l'extrémité distale du premier tronçon transversal. On augmente ainsi la rigidité de la plateforme dans sa zone la plus distante de la pale, c'est-à-dire celle subissant le couple centrifuge le plus important et donc connaissant habituellement les plus fortes déformations. On contribue ainsi à assurer la régularité de l'extrémité distale de la plateforme. En outre, un tel raidisseur disposé à cet endroit peut former une butée empêchant une plateforme de chevaucher la plateforme de l'aube voisine, en cas de choc violent successif à une ingestion d'oiseau par exemple.

Dans certains modes de réalisation, au moins un insert est disposé tangentiellement de l'extrémité proximale à l'extrémité distale du premier tronçon transversal. Un tel insert permet ainsi de rigidifier tangentiellement la plateforme entre son extrémité distale et sa jonction avec la pale, ce qui permet ainsi de réduire l'amplitude de la déformation de l'extrémité distale de la plateforme.

Dans certains modes de réalisation, au moins un insert est disposé tangentiellement sensiblement le long du segment tangentiel le plus long du premier tronçon transversal. En effet, plus une zone de la plateforme est déportée par rapport à la pale, plus le bras de levier des forces centrifuges s'exerçant sur cette zone est important et donc plus elle est sujette à des déformations importantes en fonctionnement. Dès lors, des raidisseurs sont particulièrement utiles dans les zones les plus déportées pour réduire l'amplitude des fortes déformations qui y sont habituellement constatées.

Dans certains modes de réalisation, au moins un insert est disposé tangentiellement le long de l'extrémité amont ou aval du premier tronçon transversal. En effet, dans le cas de la plateforme extrados, les extrémités amont et aval de la plateforme sont les zones de la plateforme présentant le plus grand déport par rapport à la pale. Dès lors, suivant la logique énoncée ci-dessus, des raidisseurs sont particulièrement utiles dans ces zones pour réduire l'amplitude de leurs déformations en fonctionnement.

Dans certains modes de réalisation, le premier tronçon transversal comporte au moins une patte axiale s'étendant sensiblement axialement depuis l'extrémité amont et/ou l'extrémité aval du premier tronçon transversal, ladite patte axiale comportant un pan supérieur et un pan inférieur, et au moins un insert est disposé entre les pans supérieur et inférieur de ladite patte axiale. Une telle patte permet la coopération de la plateforme avec les carters tournants amont et/ou aval, ce qui permet de bloquer la déformation des extrémités amont et/ou aval de la plateforme lors du fonctionnement du moteur. Un tel insert permet alors de renforcer cette patte pour améliorer sa tenue mécanique.

Dans certains modes de réalisation, la préforme fibreuse comprend un deuxième tronçon transversal, s'étendant transversalement depuis la jonction entre les premier et deuxième tronçons longitudinaux, dans le prolongement et à l'opposé du premier tronçon transversal, apte à former une deuxième plateforme ; le deuxième tronçon transversal comprend au moins une portion déliée comportant un pan supérieur et un pan inférieur, et au moins un insert est disposé entre les pans supérieur et inférieur de la portion déliée du deuxième tronçon transversal.

On comprend naturellement que toutes les caractéristiques évoquées ci-dessus au sujet du premier tronçon transversal peuvent se transposer au deuxième tronçon transversal.

Dans certains modes de réalisation, l'un des pans, de préférence le pan supérieur, du premier tronçon transversal est tissé de manière déliée avec le deuxième tronçon longitudinal ; ce pan prolonge donc une couche ou une série de couches du premier tronçon longitudinal. L'autre pan, de préférence le pan inférieur, du premier tronçon transversal est tissé de manière déliée avec le premier tronçon longitudinal ; ce pan prolonge donc une couche ou une série de couches du deuxième tronçon longitudinal. Il s'agit d'une stratégie de tissage désormais bien éprouvée, décrite dans la demande WO 2014/076408, aboutissant naturellement à la formation d'un tronçon transversal composé de deux pans déliés. Un croisement de couches est de préférence prévu à la jonction entre les pans supérieur et inférieur du tronçon transversal et les tronçons longitudinaux. Les pans du tronçon transversal peuvent en outre être cousus à leur extrémité distale pour fermer cette extrémité de la cavité dans laquelle sont disposés les inserts. Le cas échéant, le second tronçon transversal peut être tissé de manière analogue.

Dans d'autres modes de réalisation, chacun des pans du premier tronçon transversal est tissé de manière déliée avec le deuxième tronçon longitudinal ; chacun prolonge donc une couche ou série de couches du premier tronçon longitudinal. Cette stratégie de tissage est dérivée d'une stratégie de tissage aujourd'hui bien éprouvée, décrite notamment dans la demande WO 2013/104852, une déliaison supplémentaire étant introduite dans le tronçon transversal pour former les pans déliés supérieur et inférieur. Cette déliaison peut s'étendre jusqu'à l'extrémité distale du tronçon transversal, auquel cas les deux pans sont libres, ou bien peut s'achever avant son extrémité distale de telle sorte que les deux pans sont
rattachés à leur extrémité distale. Le cas échéant, le second tronçon transversal peut être tissé de manière analogue.

Dans d'autres modes de réalisation, chacun des pans du premier tronçon transversal est tissé de manière déliée avec le deuxième tronçon longitudinal et chacun des pans du deuxième tronçon transversal est tissé de manière déliée avec le premier tronçon longitudinal ; les pans du premier tronçon transversal prolongent alors les pans du deuxième tronçon transversal. Cette stratégie de tissage est dérivée d'une autre stratégie de tissage également bien éprouvée, décrite notamment dans la demande WO 2010/061140, une déliaison supplémentaire étant introduite dans chaque tronçon transversal pour former les pans déliés supérieur et inférieur. Cette déliaison peut s'étendre jusqu'à l'extrémité distale du tronçon transversal, auquel cas les deux pans sont libres, ou bien peut s'achever avant son extrémité distale de telle sorte que les deux pans sont rattachés à leur extrémité distale.

Dans certains modes de réalisation, les fils utilisés pour le tissage de la préforme sont des fibres de carbone. Il peut toutefois s'agir de n'importe quel autre type de fil, par exemple des fibres de verre ou de kevlar.

Dans certains modes de réalisation, l'armure utilisée pour le tissage tridimensionnel de la préforme est du type interlock 3D. Toutefois, le tissage des surfaces externes de la préforme peut être essentiellement bidimensionnel, du type satin par exemple.

Le présent exposé concerne également une aube pour turbomachine, comprenant un pied d'aube, une partie de pale, s'étendant vers le haut depuis le pied d'aube, une plateforme s'étendant transversalement à la partie de pale au niveau de la jonction entre le pied d'aube et la partie de pale, dans laquelle la plateforme est réalisée en matériau composite et comporte au moins une portion incluant, noyés dans une même matrice, un premier renfort tissé, un deuxième renfort tissé et un insert disposé entre les premier et deuxième renforts tissés.

On comprend que cette aube correspond à celle que l'on peut obtenir à l'aide de la préforme ci-dessus. En particulier, les renforts tissés sont de préférence des renforts fibreux tissés tridimensionnellement. Dès lors, toutes les caractéristiques et avantages décrits ci-dessus se transposent directement à cette aube, quelle que soit sa technique d'obtention.

Dans certains modes de réalisation, l'aube est réalisée de manière monobloc en matériau composite au moyen d'une préforme fibreuse selon l'un quelconque des modes de réalisation précédents, ladite préforme ayant été mise en forme dans un moule et noyée dans une matrice, de préférence de type organique.

Dans certains modes de réalisation, la matrice est de type organique. Il peut notamment s'agir d'une résine époxy.

Dans d'autres modes de réalisation, la matrice est du type céramique.

Le présent exposé concerne également une roue aubagée pour turbomachine, comprenant une pluralité d'aubes selon l'un quelconque des modes de réalisation précédents

Il peut s'agir d'une roue de rotor, telle une soufflante, dans laquelle les aubes sont disposées angulairement autour d'un moyeu tournant, ou d'une roue de stator, dans laquelle les aubes sont disposée angulairement au sein d'une virole fixe.

Le présent exposé concerne également une turbomachine, comprenant au moins une aube ou une roue aubagée selon l'un quelconque des modes de réalisation précédents.

Les caractéristiques et avantages précités, ainsi que d'autres, apparaîtront à la lecture de la description détaillée qui suit, d'exemples de réalisation de la préforme, de l'aube, de la roue aubagée et de la turbomachine proposés. Cette description détaillée fait référence aux dessins annexés.

### BREVE DESCRIPTION DES DESSINS

Les dessins annexés sont schématiques et visent avant tout à illustrer les principes de l'invention.

Sur ces dessins, d'une figure (FIG) à l'autre, des éléments (ou parties d'élément) identiques sont repérés par les mêmes signes de référence. En outre, des éléments (ou parties d'élément) appartenant à des exemples de réalisation différents mais ayant une fonction analogue sont repérés sur les figures par des références numériques incrémentées de 100, 200, etc.
La FIG 1 est un plan en coupe axiale d'une turbomachine selon l'invention.
La FIG 2 est un schéma partiel en coupe radiale d'une roue aubagée selon l'invention.
La FIG 3 est une vue partielle en perspective d'une aube selon un exemple de réalisation.
Les FIG 4A et 4B illustrent de manière schématique la préforme correspondant à ce premier exemple d'aube ainsi que sa mise en forme.
La FIG 5 illustre de manière simplifiée le croisement de couches de la FIG 4A.
La FIG 6 illustre un premier exemple d'inserts disposés dans la préforme de la FIG 4B.
Le FIG 7 illustre un deuxième exemple d'inserts disposés dans la préforme de la FIG 4B.
Le FIG 8 illustre un troisième exemple d'inserts disposés dans la préforme de la FIG 4B.
Le FIG 9 illustre un quatrième exemple d'inserts disposés dans la préforme de la FIG 4B.
Le FIG 10 illustre un cinquième exemple d'inserts disposés dans la préforme de la FIG 4B.

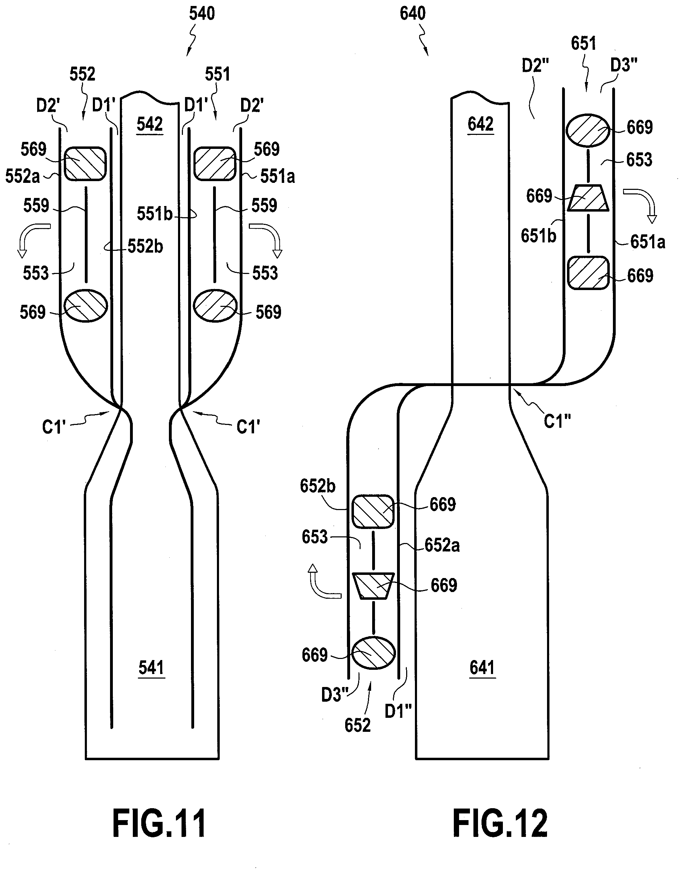

La FIG 11 illustre de manière schématique un deuxième exemple de préforme munie d'inserts.
La FIG 12 illustre de manière schématique un troisième exemple de préforme munie d'inserts.

### DESCRIPTION DETAILLEE D'EXEMPLES DE REALISATION

Afin de rendre plus concrète l'invention, des exemples de réalisation sont décrits en détail ci-après, en référence aux dessins annexés. Il est rappelé que l'invention ne se limite pas à ces exemples.

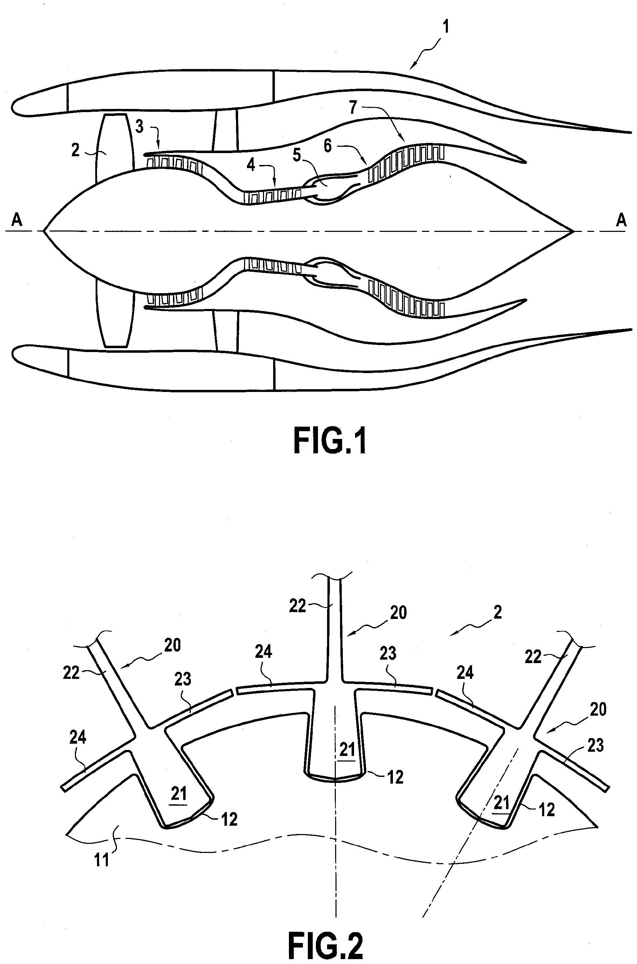

La FIG 1 représente, en coupe selon un plan vertical passant par son axe principal A, un turboréacteur à double flux 1 selon l'invention. Il comporte, d'amont en aval selon la circulation du flux d'air, une soufflante 2, un compresseur basse pression 3, un compresseur haute pression 4, une chambre de combustion 5, une turbine haute pression 6, et une turbine basse pression 7.

Comme cela est représenté sur la FIG. 2, la soufflante 2 est munie d'une pluralité d'aubes de soufflante 20 montées angulairement autour de l'axe A sur un disque 11 connecté à l'arbre basse pression de la turbomachine 1.

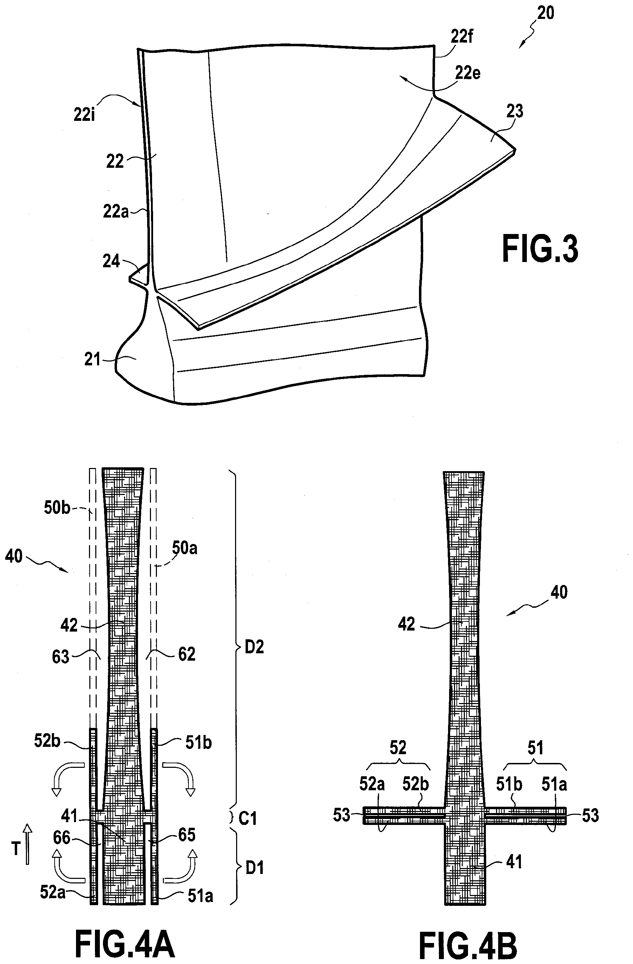

Une telle aube de soufflante est représentée sur la FIG. 3. Elle comprend un pied d'aube 21 en queue d'aronde configurée pour s'engager dans une rainure 12 du disque 11 afin de la fixer au disque 11. Ce pied d'aube 21 est prolongé vers le haut par une pale 22 présentant une face extrados 22e et une face intrados 22i s'entendant chacune d'amont en aval entre un bord d'attaque 22a et un bord de fuite 22f.

L'aube 20 comprend en outre une plateforme extrados 23, s'étendant transversalement du côté extrados de l'aube depuis la jonction entre le pied d'aube 21 et la pale 22, et une plateforme intrados 24, s'étendant transversalement du côté intrados de l'aube depuis la jonction entre le pied d'aube 21 et la pale 22.

La FIG 4A représente la préforme 40 tissée tridimensionnellement permettant de réaliser ce premier exemple d'aube 20. La FIG 4B représente la même préforme 40 après sa mise en forme. Cette préforme 40 va être décrite d'amont en aval dans la direction T de tissage, c'est-à-dire du bas vers le haut des figures. Il va toutefois de soi que le tissage pourrait être réalisé à partir de l'autre extrémité et dans l'autre sens.

Dans cet exemple de réalisation, la préforme 40 est tissée tridimensionnellement en fibres de carbone selon une armure interlock 3D. Seules les surfaces de la préforme 40 sont tissées bidimensionnellement selon une armure de type satin.

A l'extrémité amont, le tissage débute par une première zone de déliaison D1 dans laquelle un pan libre inférieur 51a d'un premier tronçon transversal 51, un premier tronçon longitudinal 41 et un pan libre inférieur 52a d'un deuxième tronçon transversal 52 sont tissés conjointement de manière déliée avec des plans de déliaison respectifs 65 et 66. Le premier tronçon longitudinal 41 conduira à terme à la formation du pied 21 de l'aube 20.

En aval de cette première zone de déliaison D1, une zone de croisement de couches C1 forme interface avec une deuxième zone de déliaison D2 dans laquelle un premier pan libre 50a, un deuxième tronçon longitudinal 42 et un deuxième pan libre 50b sont tissés conjointement de manière déliée avec des plans de déliaison respectifs 62 et 63.

Au niveau de la zone de croisement de couches C1 s'opère un croisement de couches tel que les couches de fils issues des pans libres inférieurs 51a, 52a des premier et deuxième tronçons transversaux 51, 52 se prolongent vers le deuxième tronçon longitudinal 42 tandis que les couches de fils composant les pans libres 50a, 50b sont issues du premier tronçon longitudinal 41.

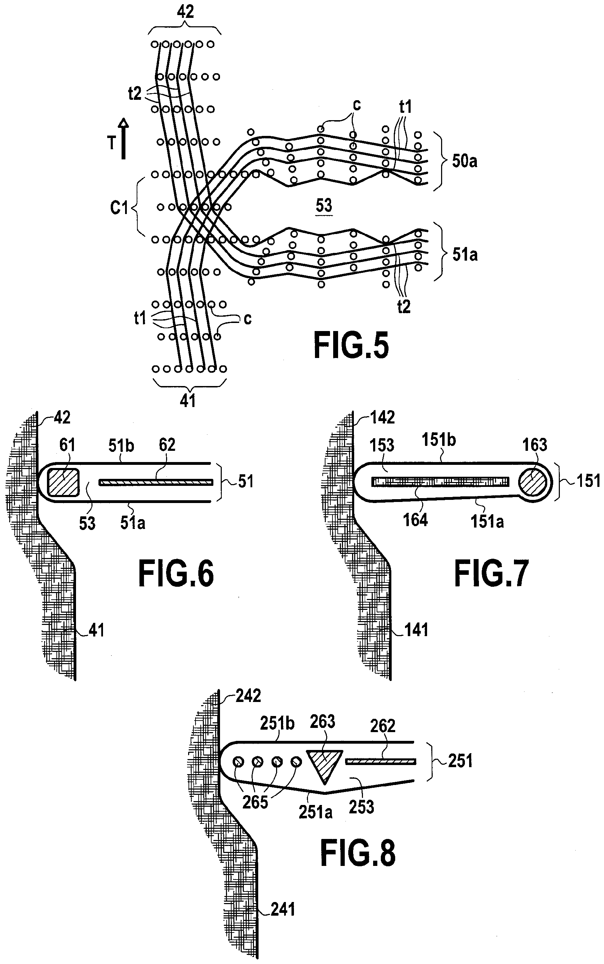

Des méthodes de tissage permettant un tel croisement de couches sont désormais bien connues dans le domaine du tissage 3D. A titre d'illustration, la FIG 5 schématise de manière simplifiée ce croisement de couches C1. Dans la zone de croisement de couches C1, les fils de trame t1 solidarisant les couches de fils de chaîne c les plus externes du premier tronçon longitudinal 41 sont déviés vers l'extérieur afin de solidariser, en aval de la zone de croisement de couches C1, les couches de fils de chaîne c du premier pan libre 50a, tandis que les fils de trame t2 solidarisant les couches du pan libre inférieur 51a sont déviés vers l'intérieur afin de solidariser les couches les plus externes du deuxième tronçon longitudinal 42. Ainsi, les fils de trame t1 et t2 se croisent au niveau de la zone de croisement de couches C1. Associée à la technique de déliaison, cette technique de croisement de couches permet de tisser deux pans 51a, 50a déliés disposés dans le prolongement l'un de l'autre en leur assurant un rattachement solide à la nappe principale 41, 42.

De retour aux FIG 4A et 4B et au tissage de la préforme 40, au sein de la deuxième zone de déliaison D2, des sorties de couches sont réalisées progressivement le long du tissage T entre le deuxième tronçon longitudinal 42 et chacun des pans libres 50a, 50b afin d'affiner le deuxième tronçon longitudinal 42 et donc la future pale 22 de l'aube.

Une fois le tissage terminé, les pans libres 50a et 50b sont découpés de manière à former respectivement le pan libre supérieur 51b du premier tronçon transversal 51 et le pan libre supérieur 52b du deuxième tronçon transversal 52.

Les pans libres inférieurs et supérieurs de chacun des tronçons transversaux 51, 52 sont alors rabattus l'un vers l'autre selon les flèches de manière à prendre leurs positions transversales finales. Un collage ou une couture peut être prévue à l'extrémité distale des pans libre. Les tronçons transversaux 51, 52 formeront ainsi respectivement les plates-formes extrados 23 et intrados 24 de l'aube 20.

Une fois les pans libres 50a et 50b découpés, les fils flottés résidant en surface du deuxième tronçon longitudinal 42, c'est-à-dire les fils de chaîne détachés de tout fil de trame issus des sorties de couches réalisées, sont désormais accessibles et peuvent être rasés.

La configuration finale de la préforme 40 est alors représentée sur la FIG 4B. Il faut noter ici que les qualificatifs « transversal » et « longitudinal » sont donnés en fonction de la position finale du tronçon considéré, les tronçons transversaux étant nécessairement tissés longitudinalement avant d'être repliés transversalement.

Les espaces séparant les pans inférieur 51a, 52a et les pans supérieurs 51b, 52b des tronçons transversaux 51, 52 forment alors des cavités internes 53 qui peuvent recevoir des inserts de natures variées. Ces inserts vont maintenant être décrits en référence aux FIG 6 à 10. L'homme du métier comprendra que les combinaisons d'inserts présentées ici ne sont pas exclusives, certains inserts d'un exemple pouvant être combinés avec des inserts d'un autre exemple, à la même place ou à une place différente, en fonction des propriétés recherchées pour les plateformes 23, 24.

La FIG 6 illustre une première configuration dans laquelle la cavité interne 53 du premier tronçon transversal 51 comprend un bouche-trou 61 et un voile bidimensionnel 62.

Le bouche-trou 61, par exemple un jonc de carbone, est disposé axialement le long de l'extrémité proximale du tronçon transversal 51, c'est-à-dire contre la zone de croisement de couche C1.

Le voile bidimensionnel 62 est réalisé quant à lui en fibres de carbone et s'étend sur toute la surface résiduelle de la cavité 53 non occupée par le bouche-trou 61 : il permet notamment d'épaissir le tronçon transversal 51.

La FIG 7 illustre une deuxième configuration dans laquelle la cavité interne 153 du premier tronçon transversal 151 comprend un raidisseur 163 et un bloc fibreux 164.

Dans cet exemple, les extrémités distales des pans inférieur 151a et supérieur 151b ont été cousus pour fermer l'extrémité distale de la cavité 153. Le raidisseur 163 est une tige métallique s'étendant axialement le long de l'extrémité distale du tronçon transversal 151, c'est-à-dire contre le bord distal de la cavité 153.

Le bloc fibreux 164 comprend des fibres de carbone tissées tridimensionnellement selon une armure interlock 3D. Son nombre de couches, et donc son épaisseur, est de préférence évolutive. Il s'étend sur toute la surface résiduelle de la cavité 153 non occupée par le raidisseur 163 pour épaissir et façonner la géométrie du tronçon transversal 151.

La FIG 8 illustre une troisième configuration dans laquelle la cavité interne 253 du premier tronçon transversal 251 comprend un raidisseur 263, un voile 262 et une série de fils 265.

Le raidisseur 263 est une tige en fibres de verre s'étendant axialement sensiblement au milieu de la cavité 253. Il influe ainsi sur la géométrie du tronçon transversal 251 et donc sur la géométrie de la plateforme final 23.

Le voile bidimensionnel 262 est inséré entre le raidisseur 263 et l'extrémité distale de la cavité 253.

Les fils 265, métalliques par exemple, s'étendent axialement et sont disposés les uns à côtés des autres entre l'extrémité proximale de la cavité 253 et le raidisseur 263.

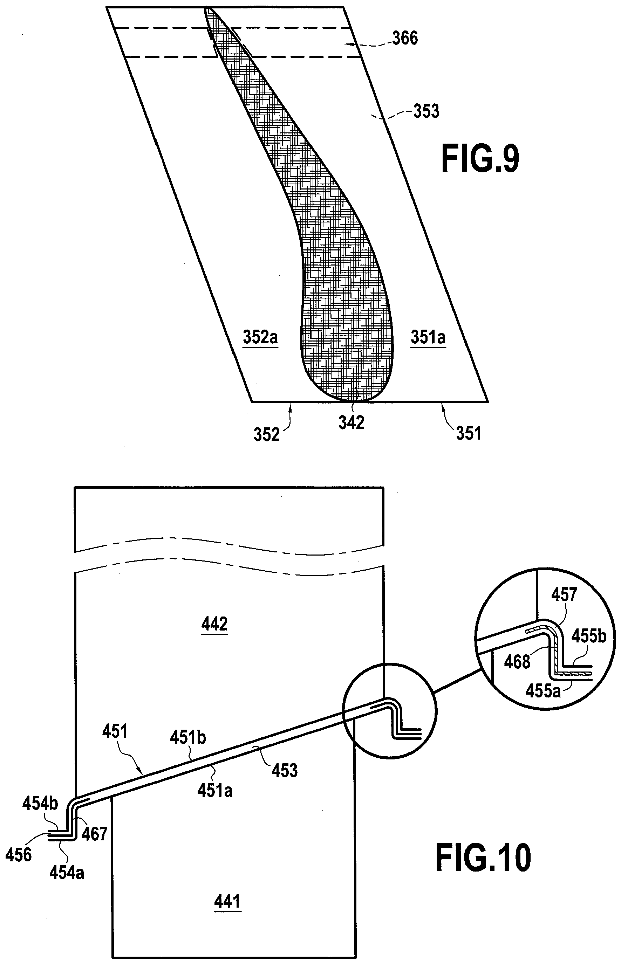

La FIG 9 illustre, en plan, une quatrième configuration dans laquelle la cavité interne 353 du premier tronçon transversal 351 comprend un raidisseur tangentiel 366 s'étendant tangentiellement depuis le deuxième tronçon longitudinal 342 jusqu'à l'extrémité distale du premier tronçon transversal 351, sensiblement le long de l'extrémité aval du premier tronçon transversal 351. Un raidisseur analogue est disposé dans la cavité du deuxième tronçon transversal 352.

La FIG 10 illustre, de profil, une cinquième configuration dans laquelle les pans inférieur 451a et supérieur 451b du premier tronçon transversal 451 comprennent chacun des pattes amont 454a, 454b et aval 455a, 455b séparées respectivement par des interstices amont 456 et aval 457 prolongeant la cavité interne 453.

Un renfort métallique 467, 468 est alors inséré dans chaque interstice 456, 457 pour renforcer les pattes 454 et 455. Une fois l'aube terminée, ces pattes 454 et 455 sont destinées à coopérer avec la virole amont et le tambour aval de la soufflante 2.

Quels que soient les inserts choisis et disposés dans la cavité interne 53 des tronçons transversaux 51, 52, la préforme 40 ainsi complétée peut alors être humidifiée pour l'assouplir et permettre un décadrage plus aisé des fibres. Elle est ensuite introduite dans un moule de formage dont l'espace intérieur est ajusté à la géométrie recherchée pour la préforme 40. Les différents inserts peuvent éventuellement être fixés aux pans inférieur et/ou supérieur des tronçons transversaux, par couture ou collage par exemple.

On sèche ensuite la préforme 40 afin que celle-ci se raidisse, bloquant ainsi la géométrie imposée lors de la mise en forme. La préforme 40 est enfin disposée dans un moule d'injection, aux dimensions de l'aube finale souhaitée 20, dans lequel on injecte une matrice, ici une résine époxy. Une telle injection peut par exemple être réalisée par le procédé connu RTM (« resin transfer molding »). A l'issue de cette étape, on obtient alors une aube 20 en matériau composite composée d'une préforme 40 tissée en fibres de carbone noyée dans une matrice époxy dont les plateformes 23, 24 sont munies d'inserts, emprisonnés dans la matrice solidifiée. Des étapes d'usinage peuvent éventuellement compléter ce procédé pour finaliser l'aube 20.

Tous les exemples présentés ci-dessus s'inscrivent dans le cas d'une stratégie de tissage communément appelée « stack-up » dans laquelle les plateformes sont issues de la réunion de deux pans libres initialement tissés dans le prolongement l'un de l'autre. Toutefois, il va de soi que la présente invention peut être mise en oeuvre avec d'autres stratégies de tissage. A titre d'exemple, deux autres stratégies de tissage adaptées vont maintenant être décrites en référence aux FIG 11 et 12.

La FIG 11 illustre schématiquement la préforme 540 obtenue par un deuxième exemple de tissage tridimensionnel. Dans ce deuxième exemple, on retrouve le premier tronçon longitudinal 541, aboutissant à la formation du pied 21 de l'aube 20, et le deuxième tronçon longitudinal 542, aboutissant à la formation de la pale 22. En revanche, les tronçons transversaux 551 et 552 sont tissés différemment que dans le premier exemple : ces derniers sont effet chacun issus d'un croisement de couche C1' à la jonction entre les premier et deuxième tronçons longitudinaux et d'une déliaison D1' les séparant du tronçon longitudinal 542. Après tissage, les tronçons transversaux 551 et 552 peuvent donc être repliés vers l'extérieur pour atteindre leur positionnement transversal final. Une telle méthode de tissage est notamment décrite dans le document WO 2013/104852.

A partir de cette technique connue, on rajoute au moment du tissage un plan de déliaison supplémentaire D2' au sein de chaque tronçon transversal 551, 552 afin de diviser chaque tronçon transversal 551, 552 en deux pans libres distincts 551a, 551b et 552a, 552b, respectivement. De manière analogue aux exemples précédents, des inserts variés 569 peuvent alors être disposés dans la cavité interne 553 formée par l'espace séparant les pans 551a, 551b et 552a, 552b de chaque tronçon transversal 551, 552.

La FIG 12 illustre schématiquement la préforme 640 obtenue par un troisième exemple de tissage tridimensionnel. Dans ce troisième exemple, on retrouve le premier tronçon longitudinal 641, aboutissant à la formation du pied 21 de l'aube 20, et le deuxième tronçon longitudinal 642, aboutissant à la formation de la pale 22. En revanche, les tronçons transversaux 651 et 652 sont à nouveau tissés d'une manière différente.

Dans ce troisième exemple, les couches constituant le premier tronçon transversal 651 prolongent les couches constituant le deuxième tronçon transversal 652 grâce à un croisement de couche C1" traversant complètement le premier tronçon longitudinal 641, du côté intrados vers le côté extrados, au niveau de la jonction entre les premier et deuxième tronçons longitudinaux 641, 642. Une première déliaison D1" permet alors de séparer le deuxième tronçon transversal 652 du premier tronçon longitudinal 641 tandis qu'une deuxième déliaison D2" permet de séparer le premier tronçon transversal 651 du deuxième tronçon longitudinal 642.

Après tissage, les tronçons transversaux 651 et 652 peuvent donc être repliés vers l'extérieur pour atteindre leur positionnement transversal final. Une telle méthode de tissage est notamment décrite dans le document WO 2010/061140.

A partir de cette technique connue, on rajoute au moment du tissage un plan de déliaison supplémentaire D3" au sein de chaque tronçon transversal 651, 652 afin de diviser chaque tronçon transversal 651, 652 en deux pans libres distincts 651a, 651b et 652a, 652b, respectivement. De manière analogues aux exemples précédents, des inserts variés 669 peuvent alors être disposés dans la cavité interne 653 formée par l'espace séparant les pans 651a, 651b et 652a, 652b de chaque tronçon transversal 651, 652.

Naturellement, les exemples de tissage décrits ci-dessus ne sont que des exemples parmi de nombreux autres possibles que l'homme du métier reconnaîtra aisément. En particulier, il est possible d'imaginer d'autres déliaisons ou d'utiliser d'autres techniques de tissage tels des croisements de couches, des sorties de couches ou des transitions d'épaisseur pour obtenir une géométrie de préforme analogue dont les tronçons transversaux sont munis d'une cavité interne.

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention.

De plus, les différentes caractéristiques de ces modes ou exemples de réalisation peuvent être utilisées seules ou être combinées entre elles. Lorsqu'elles sont combinées, ces caractéristiques peuvent l'être comme décrit ci-dessus ou différemment, l'invention ne se limitant pas aux combinaisons spécifiques décrites dans le présent exposé. En particulier, sauf précision contraire, une caractéristique décrite en relation avec un mode ou exemple de réalisation peut être appliquée de manière analogue à un autre mode ou exemple de réalisation.

## Revendications

1. Préforme fibreuse pour une aube de turbomachine, obtenue par tissage tridimensionnel, comprenant
un premier tronçon longitudinal (41), apte à former un pied d'aube (21),
un deuxième tronçon longitudinal (42), prolongeant vers le haut le premier tronçon longitudinal (41), apte à former une partie de pale (22),
un premier tronçon transversal (51), s'étendant transversalement depuis la jonction entre les premier et deuxième tronçons longitudinaux (41, 42), apte à former une première plateforme (23),
dans laquelle le premier tronçon transversal (51) comprend au moins une portion déliée comportant un pan supérieur (51b) et un pan inférieur (51a), et
**caractérisé en ce qu'** au moins un insert (61) est disposé entre les pans supérieur (51b) et inférieur (51a) de la portion déliée du premier tronçon transversal (51).

2. Préforme selon la revendication 1, dans laquelle au moins un insert est un voile tissé bidimensionnel (62).

3. Préforme selon la revendication 1 ou 2, dans laquelle au moins un insert est un raidisseur (61) incluant une tige ou une plaque rigide.

4. Préforme selon l'une quelconque des revendications 1 à 3, dans laquelle au moins un insert (61) est disposé axialement le long de l'extrémité proximale du premier tronçon transversal (51).

5. Préforme selon l'une quelconque des revendications 1 à 4, dans laquelle au moins un insert (163) est disposé axialement le long de l'extrémité distale du premier tronçon transversal (151).

6. Préforme selon l'une quelconque des revendications 1 à 5, dans laquelle au moins un insert (366) est disposé tangentiellement sensiblement le long du segment tangentiel le plus long du premier tronçon transversal (351).

7. Préforme selon l'une quelconque des revendications 1 à 6, dans laquelle au moins un insert (366) est disposé tangentiellement le long de l'extrémité amont ou aval du premier tronçon transversal (351).

8. Préforme selon l'une quelconque des revendications 1 à 7, dans laquelle le premier tronçon transversal (451) comporte au moins une patte axiale (455a, 455b) s'étendant sensiblement axialement depuis l'extrémité amont et/ou l'extrémité aval du premier tronçon transversal (451), ladite patte axiale comportant un pan supérieur (455b) et un pan inférieur (455a), et
dans laquelle au moins un insert (468) est disposé entre les pans supérieur (455b) et inférieur (455a) de ladite patte axiale.

9. Préforme selon l'une quelconque des revendications 1 à 8, comprenant un deuxième tronçon transversal (52), s'étendant transversalement depuis la jonction entre les premier et deuxième tronçons longitudinaux (41, 42), dans le prolongement et à l'opposé du premier tronçon transversal (51), apte à former une deuxième plateforme (24),
dans laquelle le deuxième tronçon transversal (52) comprend au moins une portion déliée comportant un pan supérieur (52b) et un pan inférieur (52a), et
dans laquelle au moins un insert est disposé entre les pans supérieur et inférieur de la portion déliée du deuxième tronçon transversal.

10. Aube pour turbomachine, comprenant
un pied d'aube (21),
une partie de pale (22), s'étendant vers le haut depuis le pied d'aube (21),
une plateforme (23) s'étendant transversalement à la partie de pale (22) au niveau de la jonction entre le pied d'aube (21) et la partie de pale (22),
dans laquelle la plateforme (23) est réalisée en matériau composite et comporte au moins une portion incluant, noyés dans une même matrice, un premier renfort tissé (51a), un deuxième renfort tissé (51b) et **caractérisé par** un insert (61) disposé entre les premier et deuxième renforts tissés (51a, 51b).

11. Aube selon la revendication 10, réalisée de manière monobloc en matériau composite au moyen d'une préforme fibreuse (40) selon l'une quelconque des revendications 1 à 9, ladite préforme (40) ayant été mise en forme dans un moule et noyée dans une matrice, de préférence de type organique.

12. Roue aubagée pour turbomachine, comprenant une pluralité d'aubes (20) selon la revendication 11.

13. Turbomachine, comprenant au moins une aube (20) selon la revendication 11 ou une roue aubagée (2) selon la revendication 12.

## Patentansprüche

1. Faserige Vorform für eine Schaufel einer Turbomaschine, erhalten durch dreidimensionales Weben, umfassend
einen ersten Längsabschnitt (41), der geeignet ist, einen Schaufelfuß (21) zu bilden,
einen zweiten Längsabschnitt (42), der sich von dem ersten Längsabschnitt (41) nach oben erstreckt und geeignet ist, einen Teil eines Blatts (22) zu bilden,
einen ersten Querabschnitt (51), der sich quer von der Verbindung zwischen dem ersten und dem zweiten Längsabschnitt (41, 42) erstreckt und geeignet ist, eine erste Plattform (23) zu bilden,
wobei der erste Querabschnitt (51) mindestens einen ungebundenen Anteil umfasst, der eine obere Fläche (51b) und eine untere Fläche (51a) enthält, und
**dadurch gekennzeichnet, dass** mindestens ein Einsatz (61) zwischen der oberen (51b) und der unteren (51a) Fläche des ungebundenen Anteils des ersten Querabschnitts (51) angeordnet ist.

2. Vorform nach Anspruch 1, wobei mindestens ein Einsatz eine zweidimensional gewebte Bahn (62) ist.

3. Vorform nach Anspruch 1 oder 2, wobei mindestens ein Einsatz eine Versteifung (61) ist, die eine starre Stange oder Platte beinhaltet.

4. Vorform nach einem der Ansprüche 1 bis 3, wobei mindestens ein Einsatz (61) axial entlang des proximalen Endes des ersten Querabschnitts (51) angeordnet ist.

5. Vorform nach einem der Ansprüche 1 bis 4, wobei mindestens ein Einsatz (163) axial entlang des distalen Endes des ersten Querabschnitts (151) angeordnet ist.

6. Vorform nach einem der Ansprüche 1 bis 5, wobei mindestens ein Einsatz (366) tangential im Wesentlichen entlang des längsten tangentialen Segments des ersten Querabschnitts (351) angeordnet ist.

7. Vorform nach einem der Ansprüche 1 bis 6, wobei mindestens ein Einsatz (366) tangential entlang des stromaufwärts oder stromabwärts gelegenen Endes des ersten Querabschnitts (351) angeordnet ist.

8. Vorform nach einem der Ansprüche 1 bis 7, wobei der erste Querabschnitt (451) mindestens eine axiale Lasche (455a, 455b) aufweist, die sich im Wesentlichen axial von dem stromaufwärts und/oder stromabwärts gelegenen Ende des ersten Querabschnitts (451) erstreckt, wobei die axiale Lasche eine obere Fläche (455b) und eine untere Fläche (455a) aufweist, und
wobei mindestens ein Einsatz (468) zwischen der oberen (455b) und der unteren (455a) Fläche der axialen Lasche angeordnet ist.

9. Vorform nach einem der Ansprüche 1 bis 8, umfassend einen zweiten Querabschnitt (52), der sich quer von der Verbindung zwischen dem ersten und zweiten Längsabschnitt (41, 42) in Verlängerung des ersten Querabschnitts (51) und in diesem entgegengesetzte Richtung erstreckt und geeignet ist, eine zweite Plattform (24) zu bilden,
wobei der zweite Querabschnitt (52) mindestens einen ungebundenen Anteil umfasst, der eine obere Fläche (52b) und eine untere Fläche (52a) enthält, und
wobei mindestens ein Einsatz zwischen der oberen und der unteren Fläche des ungebundenen Anteils des zweiten Querabschnitts angeordnet ist.

10. Schaufel für eine Turbomaschine, umfassend
einen Schaufelfuß (21),
einen Teil eines Blatts (22), der sich von dem Schaufelfuß (21) nach oben erstreckt,
eine Plattform (23), die sich an der Verbindung zwischen dem Schaufelfuß (21) und dem Teil eines Blatts (22) quer zu dem Teil eines Blatts (22) erstreckt,
wobei die Plattform (23) aus Verbundmaterial hergestellt ist und mindestens einen Teil aufweist, der, eingebettet in dieselbe Matrix, eine erste gewebte Verstärkung (51a) und eine zweite gewebte Verstärkung (51b) umfasst, und
**gekennzeichnet durch** einen Einsatz (61), der zwischen der ersten und zweiten gewebten Verstärkung (51a, 51b) angeordnet ist.

11. Schaufel nach Anspruch 10, die als Monoblock aus Verbundmaterial mittels einer faserigen Vorform (40) nach einem der Ansprüche 1 bis 9 hergestellt ist, wobei die Vorform (40) in einer Form geformt wird und in eine Matrix, vorzugsweise eines organischen Typs, eingebettet ist.

12. Schaufelrad für eine Turbomaschine, umfassend eine Vielzahl von Schaufeln (20) nach Anspruch 11.

13. Turbomaschine, umfassend mindestens eine Schaufel (20) nach Anspruch 11 oder ein Schaufelrad (2) nach Anspruch 12.

## Claims

1. A fiber preform for a turbine engine blade, the preform being obtained by three-dimensional weaving and comprising:
a first longitudinal segment (41) suitable for forming a blade root (21);
a second longitudinal segment (42) extending the first longitudinal segment (41) upwards and suitable for forming an airfoil portion (22); and
a first transverse segment (51) extending transversely from the junction between the first and second longitudinal segments (41, 42), and suitable for forming a first platform (23);
wherein the first transverse segment (51) includes at least a non-interlinked portion comprising a top strip (51b) and a bottom strip (51a); and
**characterized in that** at least an insert (61) is arranged between the top and bottom strips (51b, 51a) of the non-interlinked portion of the first transverse segment (51).

2. A preform according to claim 1, wherein at least insert is a two-dimensional woven web (62).

3. A preform according to claim 1 or claim 2, wherein at least an insert is a stiffener (61) including a rod or a rigid plate.

4. A preform according to any one of claims 1 to 3, wherein at least an insert (61) is arranged axially along the proximal end of the first transverse segment (51).

5. A preform according to any one of claims 1 to 4, wherein at least an insert (163) is arranged axially along the distal end of the first transverse segment (151) .

6. A preform according to any one of claims 1 to 5, wherein at least an insert (366) is arranged tangentially, substantially along the longest tangential portion of the first transverse segment (351).

7. A preform according to any one of claims 1 to 6, wherein at least an insert (366) is arranged tangentially along the upstream or downstream end of the first transverse segment (351).

8. A preform according to any one of claims 1 to 7, wherein the first transverse segment (451) includes at least an axial tab (455a, 455b) extending substantially axially from the upstream end and/or the downstream end of the first transverse segment (451), said axial tab comprising a top strip (455b) and a bottom strip (455a); and
wherein at least an insert (468) is arranged between the top and bottom strips (455b, 455a) of said axial tab.

9. A preform according to any one of claims 1 to 8, including a second transverse segment (52) extending transversely from the junction between the first and second longitudinal segments (41, 42) extending the first transverse segment (51) and going away therefrom, being suitable for forming a second platform (24);
wherein the second transverse segment (52) includes at least a non-interlinked portion comprising a top strip (52b) and a bottom strip (52a); and
wherein at least an insert is arranged between the top and bottom strips of the non-interlinked portion of the second transverse segment.

10. A blade for a turbine engine, the blade comprising:
a blade root (21);
an airfoil portion (22) extending upwards from the blade root (21); and
a platform (23) extending transversely to the airfoil portion (22) at the junction between the blade root (21) and the airfoil portion (22);
wherein the platform (23) is made of composite material and has at least a portion including, embedded in a common matrix, a first piece of woven reinforcement (51a), a second piece of woven reinforcement (51b), and **characterized by** an insert (61) arranged between the first and second pieces of woven reinforcement (51a, 51b) .

11. A blade according to claim 10, made in single-piece manner out of composite material by means of a fiber preform (40) according to any one of claims 1 to 9, said preform (40) being shaped in a mold and being embedded in a matrix, preferably of organic type.

12. A bladed wheel for a turbine engine, including a plurality of blades (20) according to claim 11.

13. A turbine engine including at least a blade (20) according to claim 11 or at least a bladed wheel (2) according to claim 12.
